# EUROPÄISCHE PATENTSCHRIFT

(11) **EP 0 891 858 B1**
(45) Veröffentlichungstag und Bekanntmachung des Hinweises auf die Patenterteilung: **07.01.2004**
(21) Anmeldenummer: 98112019.9
(22) Anmeldetag: 30.06.1998
(51) Int. Cl.: B32B 3/06, B60R 13/00, B62D 29/00

(54) **Sandwichplatte mit integriertem Profil, insbesondere für den Fahrzeugbau**
Sandwich panel with integrated profile, especially for car production
Panneau sandwich avec profil intégré, notamment pour la production de véhicules automobiles

(30) Priorität: 18.07.1997 DE 19731604
(43) Veröffentlichungstag der Anmeldung: 20.01.1999
(73) Patentinhaber: DWA, Deutsche Waggonbau GmbH, 12526 Berlin (DE)
(72) Erfinder: Schneider, Sven, 02627 Weissenberg OT Kotitz (DE)
(74) Vertreter: Akers, Noel James

(56) Entgegenhaltungen:
- EP-A- 0 633 132
- DE-A- 3 732 086

## Beschreibung

Die Erfindung bezieht sich auf eine Sandwichplatte mit integriertem Profil zu Befestigungszwecken nach dem Oberbegriff des Patentanspruches 1.

Sandwichplatten werden in vielfältigen Formen verwendet. Sie ermöglichen durch ihr niedriges spezifisches Gewicht und hohe Steifigkeit gegen Knicken und Beulen einen effektiven Leichtbau. Bekannt sind Sandwichplatten mit einem Verbund zweier steifer Deckschichten, vorwiegend aus Stahl, Aluminium oder aus Faserverbunden und einer leichten, aber relativ schubsteifen Kernschicht aus überwiegend Schaum-, Waben- oder anderem Abstandsmaterial, die mit den Deckschichten einen stoffschlüssigen Werkstoffverbund bilden. Es ist bekannt, außen an den Deckschichten verschieden profilierte Elemente zur Befestigung von Anbau- bzw. Ausbauteilen, z.B. durch Verkleben, Verschrauben und andere übliche Verbindungsarten anzubringen. Die Sandwichplatten bleiben dabei unverändert, die außen angebrachten Elemente haben jedoch den Nachteil einer größeren Bauhöhe und dadurch verminderte Einbaubedingungen der Sandwichplatten. Höher belastbare Befestigungsmöglichkeiten werden in bekannter Weise mittels Inserts in die Kernschicht mit Verbund zu den beiden Deckschichten eingebracht, in die nachträglich durch die Deckschicht hindurch bekannte Befestigungselemente eingebracht werden. Diese Ausführungen haben den Nachteil, daß sie nach dem Einlegen keine Korrektur mehr zulassen, erschwert aufgefunden werden und nur für punktuelle Befestigungen geeignet sind. Die DE 43 21 316 A1 zeigt eine Sandwichplatte mit verstärkten Anschlußbohrungen, die hülsenartige, dünnwandige Mantelteile vorsieht, die nahtlos in die Deckschichten der Sandwichplatte übergehen. Auch diese Ausführung ist nur für punktuelle Befestigungen geeignet.

Die Festigkeit einer Sandwichplatte ergibt sich aus der Zugund Scherfestigkeit sowie der Verbundfestigkeit der verschiedenen Materialien zueinander. Eine Beanspruchung senkrecht von der Plattenebene weg bewirkt bei unverstärkten Platten ein Abreißen des Kernmaterials. Durch Inserts in den Kernschichten im Verbund mit den unaufgetrennten Deckschichten können diese Erscheinungen vermieden werden, bedürfen jedoch einer genauen Lage- und Toleranzbestimmung. Bisher wurden die Deckschichten von Sandwichplatten nicht über einen längeren Bereich aufgetrennt, da dies eine bedeutende Verminderung der Eigensteifigkeit der Sandwichplatte zur Folge hätte, so daß zur Zeit nur die genannten bekannten Ausführungen mit ihren Nachteilen Anwendung finden.
Die Steifigkeit einer Sandwichplatte resultiert aus dem Produkt von Flächenträgheitsmoment und E-Modul der Einzelkomponen. ten des Sandwichverbundes. Daraus ergibt sich die Steifigkeit der SW-Platten zum größten Teil aus der Steifigkeit der Deckschichten (E-Modul der Deckschicht = 10-1000 x E-Modul der Kernschicht). Trennt man zu Integrationszwecken eine der beiden Deckschichten längs auf, ist an dieser Stelle der verbleibende Verbund in Querrichtung annähernd nur noch so steif wie die zweite Deckschicht allein. Es sind großflächige, relativ dicke Sandwichplatten mit integrierten Profilen bekannt, bei denen eine geringe Querschnittsminderung (<20%) vorhanden ist. Auf Grund der verwendeten relativ dickwandigen Stahlblechprofile (ca. 4-5 mm) sind diese Ausführungen sehr massiv und schwer.

Der Erfindung liegt die Aufgabe zugrunde eine Sandwichplatte mit geringem Gewicht zu schaffen, bei der in einer linienförmigen aufgetrennten Deckschicht Profile zu Befestigungszwecken in der Sandwichplatte integriert sind, wobei der Verlust der Steifigkeit aus der Querschnittsverringerung um bis zu 80%, bedingt durch das Auftrennen, durch die konstruktive Ausbildung der eingebrachten Elemente und die Ausbildung der aufgetrennten Deckschicht im Bereich der Auftrennung vollständig ausgeglichen und eine lagevariable Befestigung von Anbauteilen bei geringer Bauhöhe ermöglicht wird.

Die Lösung wird durch die Merkmale des Patentanspruches 1 erreicht. Eine vorteilhafte Ausbildung ist in dem Unteranspruch angegeben. Durch die erfindungsgemäß aufgebaute Sandwichplatte werden die Nachteile des Standes der Technik beseitigt.

Im folgenden wird ein Ausführungsbeispiel anhand der Zeichnungen näher erläutert. Es zeigen:
- Fig.1:: einen Schnitt durch die Sandwichplatte mit integriertem Profil und außen angebrachter Abdeckung,
- Fig.2:: einen Schnitt durch die Sandwichplatte mit integriertem Profil und integrierter Abdeckung,
- Fig.3:: den Schnitt einer Seitenansicht der Sandwichplatte mit Anbauteil,
- Fig.4:: den Schnitt A-A nach Fig.3.

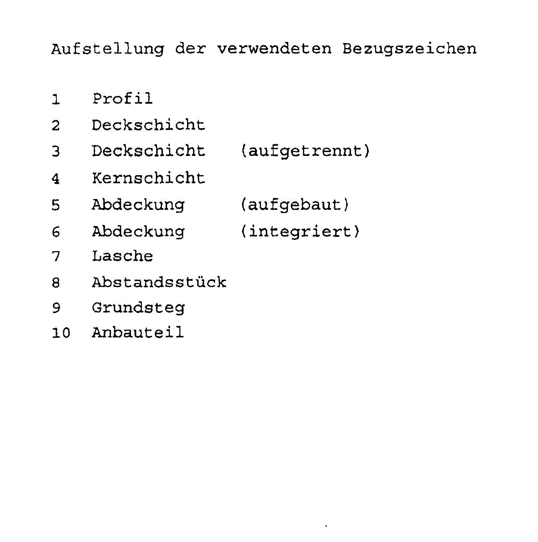

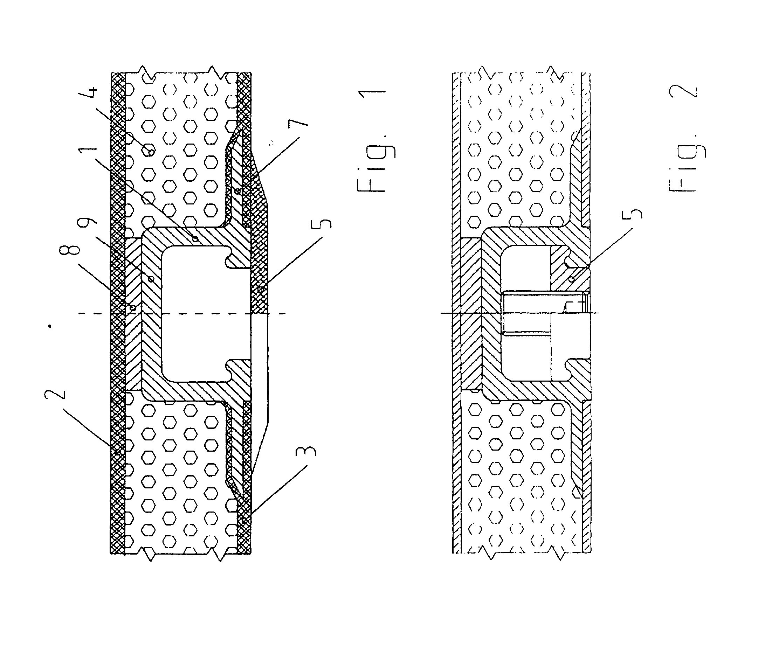

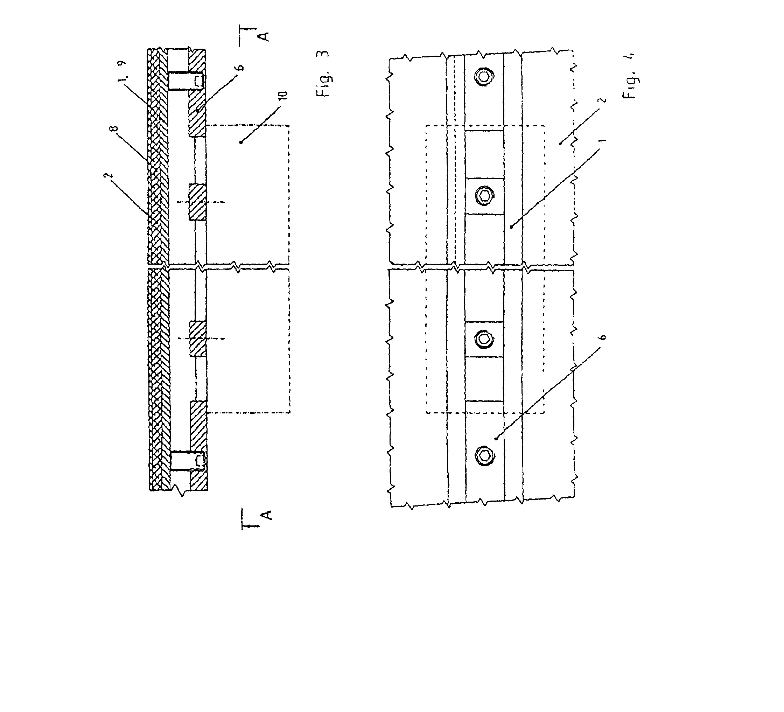

Nach Fig.1 und 2 wird eine konventionelle Sandwichstruktur mit den üblichen durchgehenden Deckschichten und der dazwischen liegenden Kernschicht derart abgeändert, daß eine Deckschicht 3 aufgetrennt und ein spezielles Profil 1, vorzugsweise ein Aluminium-Strangpreßprofil, zur Befestigung von Anbauteilen 10 gemäß Fig.3 und 4 eingesetzt wird. Dieses Profil 1 ist mit Laschen 7 zur Herstellung der Verbindung des Profils 1 zu den Deckschichten 3 der Sandwichplatte ausgestattet. Dabei stellt das Profil 1 und ein Abstandsstück 8 eine ausreichende feste und steife Verbindung zwischen den Deckschichten 2 und 3 sicher. Das Profil 1 ist in die Sandwichstruktur integriert, so daß keine größere Bauhöhe wie bei bekannten Lösungen notwendig wird. Die typische Grundeigenschaft einer Sandwichplatte, die Biegesteifigkeit, wird einzig und allein durch den Verbund von Grundsteg 9 des Profils 1, eventuellem Abstandsstück 8 und unterer Deckschicht 2 realisiert. Dies setzt eine feste Verbindung zwischen Deckschichtmaterial und Profil 1 voraus. Die Verbindung wird über am C-förmigen Profil 1 befindliche Laschen 7 realisiert. Das Fügen dieses Profiles 1 und der Deckschicht 2 erfolgt vorzugsweise mittels Klebung stoffschlüssig, jedoch sind diese Verbindungen auch mittels Niet- oder Schraubverbindung kraft- und/oder formschlüssig möglich. Stoffschlüssige Verbindungen lassen sich mit Hilfe bekannter oberflächenvergrößender Maßnahmen, wie Aufrauhen und Profilieren oder werkstoffspezifischer Behandlungen wie Primern verbessern. Weiterhin kann durch die Form der Lasche 7 durch zusätzlichen Formschluß die Verbindungsfestigkeit erhöht werden. Die resultierende Steifigkeit läßt sich mit Hilfe des Produktes aus Flächenträgheitsmoment und E-Modul vergleichen. Der negative Einfluß des Steifigkeitsverlustes wird mit Hilfe der übergreifenden stoff-, form- oder kraftschlüssigen Abdeckungen 5 und 6 über der Öffnung des Profils 1 an beliebiger Stelle ausgeglichen. Der ausgleichende Längenanteil erlaubt Unterbrechungen bis zu 2/3 der jeweiligen Länge des Profils 1. Bei Befestigung mittels kraft- oder formschlüssiger hintergreifender bekannter Nutensteine, in der Art der Abdeckung 6, gehen diese aktiv in die Steifigkeit der Sandwichplatte mit ein, was weitere notwendige Aussteifungen der Sandwichplatte minimiert.

## Patentansprüche

1. Sandwichplatte mit integriertem Profil zu Befestigungszwekken , insbesondere für den Fahrzeugbau, bestehend aus oberen und unteren Deckschichten, einer Kernschicht und Profilen, **dadurch gekennzeichnet, daß** eine der Deckschichten (3) linienförmig, durchgehend aufgetrennt ist und zwischen den Deckschichten (2 und 3) in einer Kernschicht (4) ein offenes Profil (1) eingelassen ist und mittels lokaler, teilweise variabel angeordneter Abdeckungen (5 und 6) ausgesteift ist, wobei die Abdeckungen (5 und 6) stoff-, form- oder kraftschlüssig ausgebildet sind und die Form des Profils (1) zur Aufnahme von bekannten Befestigungselementen in der Art von Abdeckung (6) und daran befestigten Anbauteilen (10) dient.

2. Sandwichplatte nach Anspruch 1, **dadurch gekennzeichnet, daß** zwischen einem Grundsteg (9) des Profils (1) und der Deckschicht (2) ein Abstandsstück (8) angeordnet ist.

## Claims

1. A sandwich panel with integral profile for fastening purposes, in particular for vehicle construction, consisting of upper and lower outer layers, a core layer and profiles, **characterised in that** one of the outer layers (3) is divided continuously in linear manner and an open profile (1) is inserted between the outer layers (2 and 3) in a core layer (4) and is stiffened by means of local, partially variably arranged covers (5 and 6), wherein the covers (5 and 6) are designed to be bonded, interlocking or non-interlocking and the shape of the profile (1) serves to accommodate known fastening elements of the nature of a cover (6) and attachments (10) fastened thereto.

2. A sandwich panel according to claim 1, **characterised in that** a spacer (8) is arranged between a base web (9) of the profile (1) and the outer layer (2).

## Revendications

1. Panneau sandwich avec profil intégré à des fins de fixation, notamment pour la construction automobile, se composant de couches de revêtements supérieure et inférieure, d'une couche centrale et de profilés, **caractérisé en ce que** l'une des couches de revêtement (3) est séparée de manière continue et linéaire et **en ce qu'**entre les couches de revêtement (2 et 3) est intégré un profilé ouvert (1) dans une couche centrale (4) qui est rigidifié au moyen de recouvrements (5 et 6) locaux, disposés de manière partiellement variable, les recouvrements (5 et 6) étant réalisés par liaison de matière, par coopération de forme ou par liaison par adhérence et la forme du profilé (1) servant à recevoir des éléments de fixation connus dans le type du recouvrement (6) et de pièces rapportées (10) y étant fixées.

2. Panneau sandwich selon la revendication 1, **caractérisé en ce qu'**une pièce d'écartement (8) est disposée entre une aile de base (9) du profilé (1) et la couche de revêtement (2).
